# EUROPEAN PATENT SPECIFICATION

(11) **EP 4 228 083 B1**
(45) Date of publication and mention of the grant of the patent: **29.10.2025**
(21) Application number: 22825288.8
(22) Date of filing: 14.06.2022
(51) Int. Cl.: H01M 50/588, H01M 50/59, H01M 50/24, H01M 50/207, H01M 50/289, H01M 50/211, H01M 50/249, H01M 50/251, H01M 50/502, H01M 10/658, H01M 50/503, H01M 50/383, H01M 50/507

(54) **BATTERY PACK WITH IMPROVED SAFETY**
BATTERIEPACK MIT VERBESSERTER SICHERHEIT
BLOC-BATTERIE PRÉSENTANT UNE SÉCURITÉ AMÉLIORÉE

(30) Priority: 14.06.2021 KR 20210077047
(43) Date of publication of application: 16.08.2023
(73) Proprietor: LG Energy Solution, Ltd., Seoul 07335 (KR)
(72) Inventor: LEE, Tae-Kyeong, Daejeon 34122 (KR); SHIN, Ju-Hwan, Daejeon 34122 (KR); WOO, Sung-Hoon, Daejeon 34122 (KR)
(74) Representative: Goddar, Heinz J.
(86) International application number: PCT/KR2022/008414
(87) International publication number: WO 2022/265363

(56) References cited:
- WO-A1-2019/244402
- JP-B2- 6 335 864
- KR-A- 20150 091 791
- KR-A- 20200 102 189
- KR-A- 20210 017 273
- KR-B1- 102 233 501

## Description

### TECHNICAL FIELD

The present application claims priority to Korean Patent Application No. 10-2021-0077047 filed on June 14, 2021 in the Republic of Korea.

The present disclosure relates to a battery, and more particularly, to a battery pack with improved safety to more effectively prevent thermal propagation between battery modules, a vehicle and an energy storage system including the same, and a bus bar or the like used for the same.

### BACKGROUND ART

As the demand for portable electronic products such as laptops, video cameras and mobile phones has rapidly increased and robots, electric vehicles and the like are being commercialized in earnest, research on high-performance secondary batteries allowing repeatedly charging and discharging has been actively researched.

Currently commercialized secondary batteries include nickel cadmium battery, nickel hydrogen battery, nickel zinc battery, lithium secondary battery, and so on, among which the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses lithium-based oxides and carbon materials as a positive electrode active material and a negative electrode active material, respectively. The lithium secondary battery includes an electrode assembly with in which a positive electrode plate and a negative electrode plate respectively coated with the positive electrode active material and the negative electrode active material are disposed with a separator interposed therebetween, and an exterior, namely a battery case, for sealing the electrode assembly together with an electrolyte.

In general, the lithium secondary battery may be classified depending on the shape of the exterior into a can-type secondary battery in which the electrode assembly is included in a metal can and a pouch-type secondary battery in which the electrode assembly is included in a pouch of an aluminum laminate sheet.

Recently, secondary batteries have been widely used for driving or energy storage not only in small devices such as portable electronic devices, but also in medium and large devices such as electric vehicles and energy storage systems (ESS). In particular, in the case of a middle-sized or large-sized device, a plurality of secondary batteries may be electrically connected to each other to configure one battery module, and a plurality of battery modules may be connected to form one battery pack in order to improve the output and/or capacity of the battery.

Typically, in a battery pack for a vehicle, a plurality of battery modules may be accommodated in the inner space of a pack case, and the plurality of battery modules may be electrically connected to each other in series and/or in parallel to each other through a bus bar (module bus bar).

However, as a plurality of battery modules are included in the battery pack as described above, the safety of the battery pack is emerging as a more important issue. In particular, when a situation such as a thermal runaway occurs inside any one battery module, it is necessary to appropriately suppress thermal propagation between battery modules. If thermal propagation between battery modules is not properly suppressed, it may lead not only to a failure of the battery pack but also to explosion or fire of the battery pack, resulting in serious personal and property damage.

Therefore, various attempts have been made to suppress thermal propagation between battery modules. A typical example is to provide a barrier between battery modules in a material and shape capable of blocking heat or flame. However, the conventional barrier provided between battery modules has a problem in that thermal propagation cannot be completely blocked. In particular, battery modules may be electrically connected to each other through a bus bar, but there is a problem that thermal propagation occurs since flame or gas generated from a specific battery module flows into an adjacent battery module through a portion where such the bus bar is installed.

KR 2015 0091791 A relates to a busbar module.

WO 2019 244402 A1 relates to a secondary battery module.

KR 2021 0017273 A relates to a battery pack structure capable of increasing mechanical rigidity and space utilization.

### DISCLOSURE

### Technical Problem

The present disclosure is designed to solve the problems of the related art, and therefore the present disclosure is directed to providing a battery pack, which may effectively suppress thermal propagation between battery modules even in a portion where a bus bar unit is installed, a vehicle and an energy storage system including the same, and a bus bar unit or the like for the same.

However, the technical problems to be solved by the present disclosure are not limited to the above, and other problems not mentioned herein will be clearly understood by those skilled in the art from the following disclosure.

### Technical Solution

In one aspect of the present disclosure, there is provided a battery pack, comprising: a plurality of battery modules, each of which includes at least one battery cell and a module terminal; a barrier unit interposed between adjacent battery modules; and a bus bar unit configured to electrically connect module terminals of different battery modules and located at an end or inside of the barrier unit to seal the end or inside of the barrier unit.

Here, the battery pack according to the present disclosure may further comprise a split unit disposed to be orthogonal to the barrier unit and interposed between adjacent battery modules, and the bus bar unit may be configured to be interposed between the end of the barrier unit and a surface of the split unit.

In addition, the barrier unit may have an accommodation groove with a partially cut-off shape, and the bus bar unit may be configured to be seated in the accommodation groove and fill the accommodation groove.

In addition, the barrier unit may be configured in a plate shape and has the accommodation groove at an edge portion thereof.

In addition, the bus bar unit may include a conduction portion made of an electrically conductive material and having both ends connected to module terminals of different battery modules, and a sealing portion configured to surround the conduction portion and protrude outer than the conduction portion to seal the end or inside of the barrier unit.

In addition, the sealing portion may be made of an elastic material.

In addition, the bus bar unit may further include a blocking portion made of a material having a higher melting point than the sealing portion and attached to a surface of the sealing portion.

In addition, the blocking portion may be configured so that at least one end thereof is bent.

In addition, the sealing portion may have a protrusion or a groove formed to be insertion-fastened with an accommodation portion of the barrier unit.

In addition, the sealing portion may have a perforated hole formed so that a cable passes therethrough.

In another aspect of the present disclosure, there is also provided a vehicle, comprising the battery pack according to the present disclosure.

In another aspect of the present disclosure, there is also provided an energy storage system, comprising the battery pack according to the present disclosure.

In another aspect of the present disclosure, there is also provided a bus bar, comprising: a conduction portion made of an electrically conductive material and connected to module terminals of different battery modules; and a sealing portion configured to surround the conduction portion and protrude outer than the conduction portion to seal an end or inside of a barrier unit.

### Advantageous Effects

According to the present disclosure, a battery pack with improved safety may be provided.

In particular, according to an embodiment of the present disclosure, when an event occurs in a specific battery module among a plurality of battery modules included in the battery pack to generate gas or flame, it is possible to more effectively prevent the gas or flame from being propagated to other battery modules.

Moreover, according to an embodiment of the present disclosure, since the space for fastening the bus bar unit for electrical connection between battery modules is sealed, it is possible to reliably prevent thermal propagation from occurring between battery modules through a portion where the bus bar unit is provided.

In addition, according to an embodiment of the present disclosure, even with a simple structure or a simple assembly process, the heat propagation prevention structure may be implemented at the bus bar unit.

In addition, the present disclosure may have various other effects, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing the configuration of a battery pack according to an embodiment of the present disclosure.
FIG. 2 is an enlarged view showing a portion A1 of FIG. 1.
FIG. 3 is a diagram showing the configuration of FIG. 1 in an assembled state.
FIG. 4 is a diagram schematically showing a configuration in which a barrier unit and a bus bar unit are separated according to an embodiment of the present disclosure.
FIG. 5 is a diagram schematically showing a configuration in which the barrier unit and the bus bar unit of FIG. 4 are coupled.
FIG. 6 is a perspective view schematically showing the configuration of the bus bar unit according to an embodiment of the present disclosure.
FIG. 7 is a perspective view schematically showing the configuration of a bus bar unit according to another embodiment of the present disclosure.
FIG. 8 is a diagram schematically showing a part of the configuration in which the bus bar unit of FIG. 7 is installed between the barrier unit, the pack case, and the split unit.
FIG. 9 is a diagram schematically showing a part of the configuration in which the bus bar unit according to another embodiment of the present disclosure is installed between the barrier unit, the pack case, and the split unit.
FIG. 10 is an exploded perspective view schematically showing some components of a bus bar unit and a barrier unit according to another embodiment of the present disclosure.
FIG. 11 is a perspective view schematically showing the configuration of a bus bar unit according to another embodiment of the present disclosure.
FIG. 12 is a diagram schematically showing a partial configuration of a battery pack to which the bus bar unit of FIG. 11 is applied.
FIG. 13 is a diagram schematically showing a part of the configuration in which a bus bar unit according to another embodiment of the present disclosure is coupled to the barrier unit.
FIG. 14 is an exploded perspective view schematically showing the configuration of a bus bar unit and a barrier unit according to another embodiment of the present disclosure.
FIG. 15 is a diagram schematically showing a partial configuration of a battery pack according to another embodiment of the present disclosure.
FIG. 16 is a diagram schematically showing a partial configuration of a battery pack according to another embodiment of the present disclosure.
FIG. 17 is a diagram schematically showing a partial configuration of a battery pack according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure.

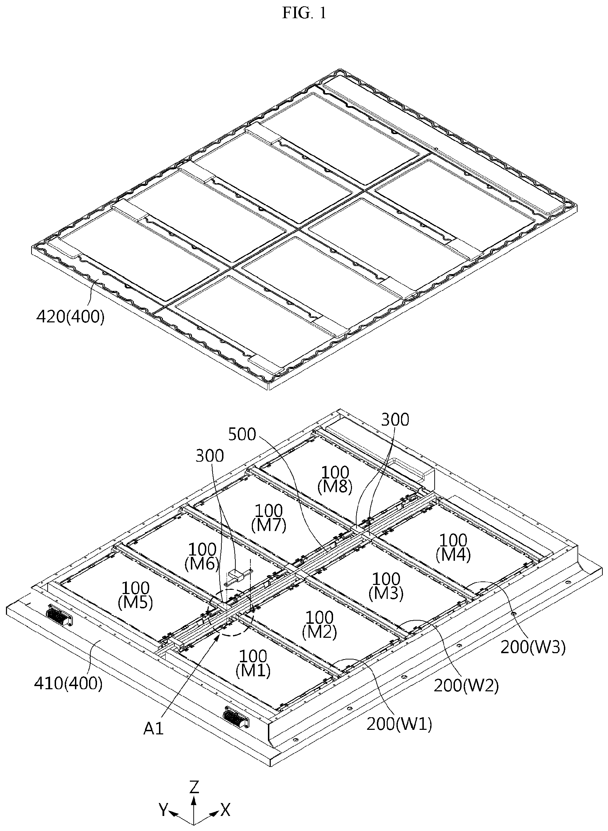

FIG. 1 is a perspective view schematically showing a configuration of a battery pack according to an embodiment of the present disclosure. In particular, in FIG. 1, some components of the battery pack are illustrated in an exploded form for convenience of explanation.

Referring to FIG. 1, the battery pack according to the present disclosure includes a battery module 100, a barrier unit 200, and a bus bar unit 300.

The battery module 100 may include at least one battery cell. Here, each battery cell may mean a secondary battery. The secondary battery may include an electrode assembly, an electrolyte and a battery case. For example, the battery cell provided in the battery module 100 may be a pouch-type secondary battery. However, other types of secondary batteries, such as a cylindrical battery or a prismatic battery, may also be employed in the battery module 100 of the present disclosure.

The plurality of secondary batteries may be included in the battery module 100 in a stacked form. For example, the plurality of secondary batteries may be stacked so as to be arranged in a horizontal direction (x-axis direction in the drawing) while standing in an upper and lower direction (z-axis direction in the drawing), respectively. Each battery cell may include electrode leads, and the electrode leads may be located at both ends or at one end of each battery cell.

The battery module 100 may include a module terminal. For example, in the battery module 100, electrode leads of each battery cell are positioned on the front and/or rear side, and the module terminals may be positioned to be electrically connected to the electrode leads. In particular, the module terminals may be located on the front and/or rear side of the battery module 100 and configured to protrude forward and/or rearward. The module terminal may allow the secondary battery (battery cell) included in the battery module 100 to be electrically connected to another component outside the battery module 100, for example, another battery module 100.

In addition, the battery module 100 may include a module case. The module case may be configured to have an empty space formed therein so that at least one battery cell is accommodated in the inner space. For example, the module case may be configured such that an inner space is defined by an upper plate, a lower plate, a left plate, a right plate, a front plate and a rear plate, and a plurality of battery cells are accommodated in the inner space. Alternatively, the battery module 100 may be configured such that which at least a part of the module case, for example a side plate or a top plate, is excluded. Alternatively, the battery module 100 may be configured to include only a plurality of cell stacks without a module case.

The present disclosure is not limited to a specific shape or configuration of the battery module 100, and various battery modules 100 known at the time of filing of this application may be employed in the battery pack of the present disclosure.

The battery pack according to the present disclosure may include a plurality of battery modules 100. In particular, at least two of the plurality of battery modules 100 or all of the battery modules 100 may be arranged in a horizontal direction. For example, when the battery pack according to the present disclosure includes eight battery modules M1 to M8, eight battery modules 100 may be arranged in the horizontal direction in two rows, and four battery modules 100 may be configured in each row. In this case, it may be regarded that four battery modules M1 to M4 constitute one row, and the other four battery modules M5 to M8 constitute the other row.

The barrier unit 200 may be configured to be interposed between adjacent battery modules 100. For example, when the plurality of battery modules 100 are arranged in the left and right direction, the barrier unit 200 may be interposed between each battery modules 100 to separate the left battery module and the right battery module. As a more specific example, in the configuration of FIG. 1, a barrier unit W1 may be interposed between a battery module M1 and a battery module M2 to separate the battery modules M1 and M2 from each other, a barrier unit W2 may be interposed between the battery module M2 and the battery module M3 to separate the battery modules M2 and M3 from each other, and a barrier unit W3 may be interposed between the battery module M3 and the battery module M4 to separate the battery modules M3 and M4 from each other.

In particular, the barrier unit 200 may be configured in a plate shape. In this case, the barrier unit 200 may be configured such that both surfaces thereof are arranged in the horizontal direction and stand up to face the side surface of the battery module. For example, the barrier unit 200 may be interposed to stand up between the battery modules 100 arranged in the left and right direction, so that the left surface and the right surface thereof are arranged to face the right surface of the left battery module 100 and the left surface of the right battery module 100, respectively.

The barrier unit 200 may be formed of a shape and material capable of blocking or reducing the propagation of heat and/or flame between the battery modules 100. For example, the barrier unit 200 may be configured in the form of a steel/aluminum/steel type clad metal. In addition, the barrier unit 200 may be configured to have an empty space therein so that air is included in the empty space, thereby improving the heat insulation function and reducing the weight. Moreover, the barrier unit 200 may be formed of various other shapes and materials capable of blocking or suppressing heat and/or flame.

The bus bar unit 300 may be configured to electrically connect module terminals of different battery modules 100. For example, the bus bar unit 300 may include a plate made of an electrically conductive material, for example a metal material. In addition, both ends of the metal plate may be configured to be respectively fastened to the module terminals of the adjacent battery modules 100. At this time, a fastening hole may be formed in the metal plate of the bus bar unit 300 to be fastened to the module terminal.

The bus bar unit 300 may be located at the end or inside of the barrier unit 200. For example, when the barrier unit 200 is configured to be elongated in the front and rear direction (y-axis direction in the drawing) in a state of standing up in the upper and lower direction (z-axis direction in the drawing), the end of the barrier unit 200 may be located on the front side and/or the rear side. In this case, the bus bar unit 300 may be configured to be positioned at the end of the barrier unit 200, namely the front end and/or the rear end of the barrier unit 200. For example, referring to FIG. 1, in the case of the barrier unit 200 interposed between the battery modules M1 to M4, the bus bar unit 300 may be located at the front end of the barrier unit 200 (+y-axis in the drawing). In addition, in the configuration of FIG. 1, in the case of the barrier unit 200 interposed between the battery modules M5 to M8, the bus bar unit 300 may be located at the rear end of the barrier unit 200 (-y-axis in the drawing).

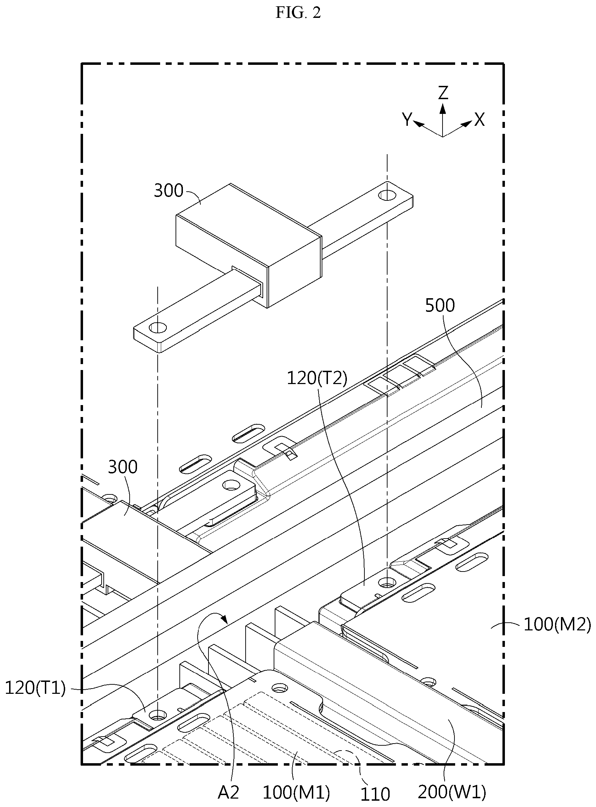

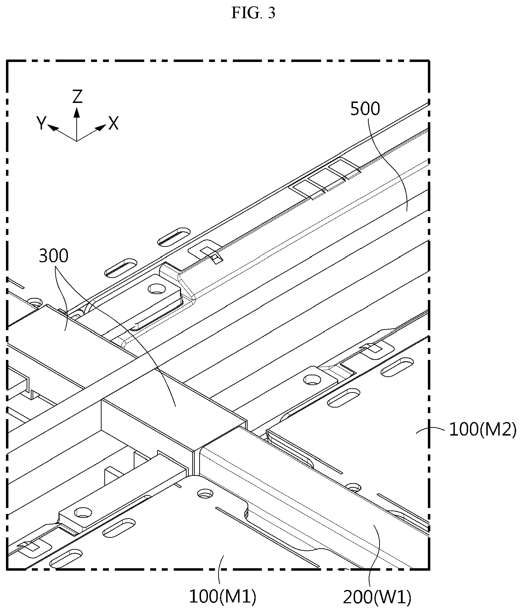

In particular, the bus bar unit 300 according to the present disclosure may be positioned at the end or inside of the barrier unit 200 as described above and configured to seal the end or inside of the barrier unit 200. This will be described in more detail with reference to FIGS. 2 and 3.

FIG. 2 is an enlarged view showing a portion A1 of FIG. 1, and FIG. 3 is a diagram showing the configuration of FIG. 1 in an assembled state.

First, referring to FIG. 2 along with FIG. 1, the plate-shaped barrier unit W1 is interposed between side surfaces of two battery modules M1 and M2 in an erected form. In this case, each of the two battery modules 100 may include a plurality of battery cells 110 and a module terminal 120. In particular, the battery module M1 may include a module terminal T1, and the battery module M2 may include a module terminal T2. At this time, the bus bar unit 300 may be connected between the two module terminals T1 and T2, and a seating space (accommodation portion) for installing the bus bar unit 300 may be required at the front end of the barrier unit W1, as indicated by A2 in FIG. 2.

In addition, referring to FIG. 3 further, the bus bar unit 300 may be seated in the accommodation portion at the front end of the barrier unit W1. In particular, the bus bar unit 300 according to the present disclosure may be configured to seal the empty space (accommodation portion) formed at the front end of the barrier unit 200. For example, in the configuration of FIG. 3, the bus bar unit 300 may be seated in the empty space formed at the front end of the barrier unit 200 as indicated by A2 and so that both ends thereof are respectively fastened to the module terminals T1 and T2 of the two battery modules M1 and M2 and also the front end (accommodation portion) of the barrier unit 200 indicated by A2 is sealed.

Moreover, the inner surface of the split unit 500 or the pack case 400 having a similar shape to that of the barrier unit 200 may be located at the front end of the barrier unit 200. At this time, an empty space may be formed between the front end (+y-axis direction) of the barrier unit 200 and the surface of the split unit 500 or the inner surface of the pack case 400, and the bus bar unit 300 may be configured to seal the space between the barrier unit 200 and the split unit 500 or the space between the barrier unit 200 and the pack case 400. To this end, the bus bar unit 300 may be configured to be in contact with the end of the barrier unit 200. For example, the bus bar unit 300 may be configured such that the rear end (-y-axis direction) thereof is attached to the front end of the barrier unit 200. In addition, the bus bar unit 300 may be configured such that the front end thereof is in contact with the inner surface of the split unit 500 or the pack case 400.

Moreover, the bus bar unit 300 may be configured to seal the empty space in the extending direction of the barrier unit 200. For example, in the configuration of FIGS. 2 and 3, the barrier unit 200 may be configured in the form of a plate elongated in the front and rear direction (±y-axis direction) of the battery pack, and the bus bar unit 300 may be interposed in the empty space between the barrier unit 200 and the split unit 500 to seal the front side (+y-axis direction), so that an empty space does not exist at the front end of the barrier unit 200.

According to this configuration of the present disclosure, the bus bar unit 300 together with the barrier unit 200 may effectively prevent thermal propagation from occurring between different battery modules 100. In particular, according to this embodiment, even if the barrier unit 200 exists between the battery modules 100, the blocking function of the barrier unit 200 may be reduced due to the space for electrically connecting the battery modules 100, but the bus bar unit 300 may compensate for the reduction in the blocking function of the barrier unit 200. Moreover, according to this embodiment of the present disclosure, the inflow and outflow of flame or gas to/from the bus bar unit 300 is blocked, so that thermal propagation prevention performance between the battery modules 100 may be stably secured.

The battery pack according to the present disclosure may further include a pack case 400 as shown in FIG. 1.

The pack case 400 may have an empty space formed therein, and the plurality of battery modules 100, the barrier unit 200, and the bus bar unit 300 may be accommodated in the empty space. For example, the pack case 400 includes a lower case 410 and an upper case 420, and the lower case 410 and the upper case 420 may be fastened with each other to seal the inner space. As an example, the lower case 410 may be configured in the form of a box with an open upper portion, and the upper case 420 may be configured to cover the upper open end of the lower case 410.

In particular, the upper end and the lower end of the barrier unit 200 may be in contact with the lower surface of the upper case 420 and the upper surface of the lower case 410, respectively. In this case, it is possible to prevent gas or flame from leaking between the upper and lower ends of the barrier unit 200 and the inner upper and lower surfaces of the pack case 400.

In addition, the bus bar unit 300 may be configured such that the upper end or the lower end thereof is in contact with the lower surface of the upper case 420 or the upper surface of the lower case 410. For example, when the bus bar unit 300 is positioned at the upper portion of the front side of the barrier unit 200, the upper end of the bus bar unit 300 may be configured to contact the lower surface of the upper case 420. In particular, as shown in FIG. 3, in a state of being fastened to the module terminal 120 of the battery module 100, the bus bar unit 300 may be configured so that the upper end (upper surface) thereof is located on the same plane as the upper end (upper surface) of the barrier unit 200. That is, the bus bar unit 300 may be configured such that the height of the upper end thereof is the same as the height of the upper end of the barrier unit 200 in a state of being installed in the accommodation portion of the barrier unit 200. In this case, it is possible to prevent an empty space from being formed between the barrier unit 200/the bus bar unit 300 and the upper case 420. Accordingly, a gap may not exist between the barrier unit 200/the bus bar unit 300 and the upper case 420.

The pack case 400 may be configured in various forms known at the time of filing of this application, and the battery pack according to the present disclosure does not limit the pack case 400 to a specific form.

The battery pack according to the present disclosure may further include a split unit 500 as shown in FIGS. 1 to 3.

The split unit 500, like the barrier unit 200, may be configured to be interposed between adjacent battery modules 100. In particular, the split unit 500 may be interposed between different rows of the battery modules 100. For example, in the configuration of FIG. 1, the split unit 500 may be disposed to be interposed between the first row M1 to M4 of the battery modules 100 and the second row M5 to M8 of the battery modules 100. In this case, the split unit 500 may be interposed between the battery modules 100 arranged in the front and rear direction (±y-axis direction). For example, in the configuration of FIG. 1, the split unit 500 may be configured to be interposed between the battery module M1 and the battery module M5 and between the battery module M2 and the battery module M6. In particular, the split unit 500 may be arranged to face the front side or the rear side of the battery module 100 where the module terminal 120 is located, and may be configured to split the battery modules 100 from each other.

The split unit 500, like the barrier unit 200, is formed in a plate shape, and both surfaces thereof may be erected in a horizontal direction. In particular, the split unit 500 may be configured such that both surfaces thereof face the front or rear side of the battery module 100. In addition, the split unit 500 may be formed of various shapes and materials capable of blocking heat and/or flame. For example, the split unit 500 may be configured in the form of a clad metal made of steel/aluminum/steel material. In addition, the split unit 500 may be configured to have an empty space formed therein.

The split unit 500 may be configured to be orthogonal to the barrier unit 200. For example, as shown in FIG. 1, when the barrier unit 200 is disposed in the form of a plate elongated in the front and rear direction (y-axis direction), the split unit 500 may be arranged in the form of a plate elongated in the left and right direction (x-axis direction).

In this embodiment, the bus bar unit 300 may be configured to be interposed between the end of the barrier unit 200 and the surface of the split unit 500. That is, referring to FIG. 2, a separated space as indicated by A2 may exist between the end of the barrier unit 200 and the surface of the split unit 500, and the bus bar unit 300 may be inserted into the separated space to fill the separated space between the barrier unit 200 and split unit 500.

In particular, the bus bar unit 300 may be configured such that both ends thereof are in contact between the split unit 500 and the barrier unit 200. For example, in the configuration shown in FIG. 3, the rear end of some bus bar units 300 may be in contact with the front end of the barrier unit 200, and the front end of the bus bar unit 300 may be in contact with the rear surface of the split unit 500.

According to this configuration of the present disclosure, when the plurality of battery modules 100 are arranged in several rows, the spaces divided by the split unit 500 and the barrier unit 200 may be securely sealed from each other. For example, as shown in FIG. 1, when the battery modules 100 are arranged in two or more rows and two or more battery modules 100 are arranged in each row so that the side surfaces thereof face each other, the spaces in each of which the battery module 100 is located may be thermally independent from each other by the split unit 500, the barrier unit 200, and the bus bar unit 300. In particular, a space for electrical connection between the battery modules 100 may be provided between the split unit 500 and the barrier unit 200. Here, as this space is sealed by the bus bar unit 300, it is possible to effectively prevent or reduce thermal propagation caused by the inflow and outflow of gas or flame between the battery modules 100.

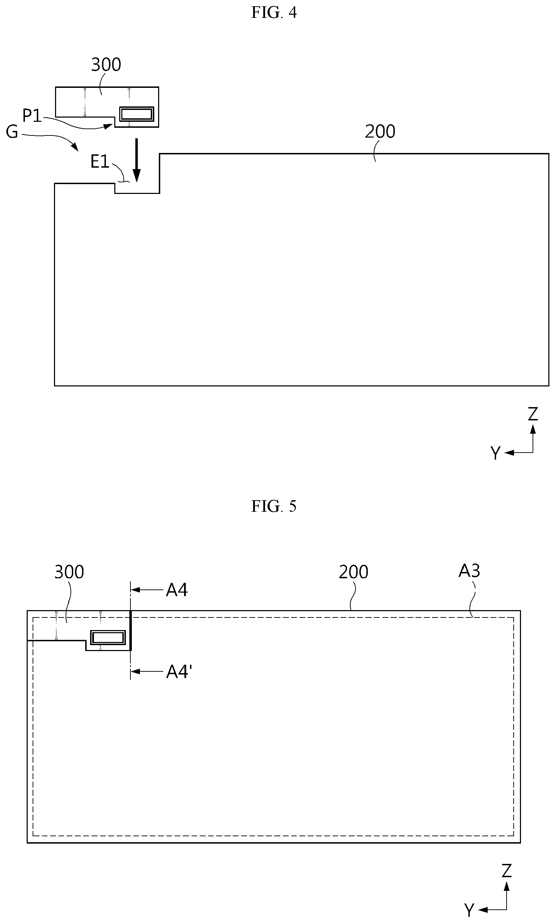

Moreover, the barrier unit 200 may have an accommodation groove, and the bus bar unit 300 may be configured to fill the accommodation groove. This will be described in more detail with reference to FIGS. 4 and 5.

FIG. 4 is a diagram schematically showing a configuration in which the barrier unit 200 and the bus bar unit 300 are separated according to an embodiment of the present disclosure, and FIG. 5 is a diagram schematically showing a configuration in which the barrier unit 200 and the bus bar unit 300 of FIG. 4 are coupled.

First, referring to FIG. 4, as indicated by G, an accommodation groove may be formed in the barrier unit 200. In particular, the accommodation groove G may be formed in a partially cut-off shape in the barrier unit 200. For example, in the configuration of FIG. 4, a part of the upper end of the barrier unit 200 may be cut by a predetermined distance in the lower direction to form the accommodation groove G concave downward. Here, when the barrier unit 200 is manufactured, the barrier unit 200 may be prepared in a form in which the accommodation groove G is already formed from the beginning, without actually cutting off a part of the barrier unit 200.

The bus bar unit 300 may be configured to be seated in the accommodation groove G. For example, the bus bar unit 300 may be configured to be seated in the accommodation groove G of the barrier unit 200 by moving downward as indicated by an arrow in FIG. 4. At this time, at least a part of the lower end of the bus bar unit 300 may be formed in a shape corresponding to the shape of the accommodation groove G, namely in a shape to be engaged with the accommodation groove G.

Moreover, the bus bar unit 300 may be entirely or partially formed in a shape corresponding to the shape of the accommodation groove. In particular, the bus bar unit 300 may be configured to completely fill the accommodation groove G when being seated in the accommodation groove G of the barrier unit 200. For example, as shown in FIG. 5, when the barrier unit 200 is configured in a substantially rectangular plate shape and the accommodation groove G is formed in a part of the upper end of the front side (+y-axis direction), the bus bar unit 300 may be inserted into the accommodation groove G of the barrier unit 200 to completely fill the accommodation groove G. In this case, due to the coupling of the barrier unit 200 and the bus bar unit 300, the entire rectangular area as indicated by A3 may be sealed.

Accordingly, when gas or flame is generated in one of the two battery modules 100 adjacent to the barrier unit 200, the generated gas or flame may be blocked not only by the barrier unit 200 but also by the bus bar unit 300. Therefore, the transmission of gas or flame is blocked between the battery modules 100 electrically connected to each other through the bus bar unit 300 with the barrier unit 200 being interposed therebetween, thereby suppressing thermal propagation.

In particular, the barrier unit 200 may be configured in a plate shape so that an accommodation groove G is formed in an edge portion thereof. Moreover, the accommodation groove G of the barrier unit 200 may be formed near the vertex of the barrier unit 200. For example, referring to FIG. 4, in the barrier unit 200, the accommodation groove may be formed in a shape concave downward at the upper end edge. In particular, it may be regarded that the accommodation groove G is also formed at the front edge (+y-axis direction) of the barrier unit 200. In this case, it may be regarded that the accommodation groove G is formed near the vertex where the upper end edge of the barrier unit 200 and the front edge meet.

According to this configuration of the present disclosure, it is possible to couple the bus bar unit 300 and the barrier unit 200 by a simple assembly process. In particular, the module terminal 120 may be located at the upper end of the front side of the battery module 100, and according to this embodiment, the bus bar unit 300 may be located in a form suitable for the configuration of the battery module 100. Moreover, according to this embodiment, the coupling process of the bus bar unit 300 and the barrier unit 200 may be performed simply. That is, in a state in which the battery module 100 and the barrier unit 200 are located inside the pack case 400, the bus bar unit 300 may move downward and be seated in the accommodation groove G formed at the upper end of the barrier unit 200. Therefore, the assembly process of the bus bar unit 300 for the accommodation groove G of the barrier unit 200 may be easily performed, and only by this simple assembly process, the sealing configuration of the accommodation groove G of the barrier unit 200 by the bus bar unit 300 may be obtained.

Moreover, when the bus bar unit 300 is located near the edge of the barrier unit 200, particularly the vertex, the outer edge of the bus bar unit 300 may be configured to be formed on one straight line or one plane with the edge of the barrier unit 200.

For example, referring to FIG. 5, the bus bar unit 300 may be configured such that the upper end edge thereof is in a straight line or plane with the upper end edge of the barrier unit 200 in a state of being inserted into the accommodation groove of the barrier unit 200. In addition, the bus bar unit 300 may be configured such that, in a state of being inserted into the accommodation groove of the barrier unit 200, the front edge (+y-axis direction) is in a straight line or plane with the front side edge of the barrier unit 200.

According to this configuration of the present disclosure, the sealing configuration by the bus bar unit 300 and the barrier unit 200 may be more reliably achieved. In particular, the upper edge and the front edge of the barrier unit 200 may be in contact with the surfaces of the upper case 420 and the split unit 500, respectively. Here, when the edge of the barrier unit 200 and the edge of the bus bar unit 300 are configured to be in one straight line or plane, the sealing properties for the surfaces of the upper case 420 and the split unit 500 may be ensured as a whole.

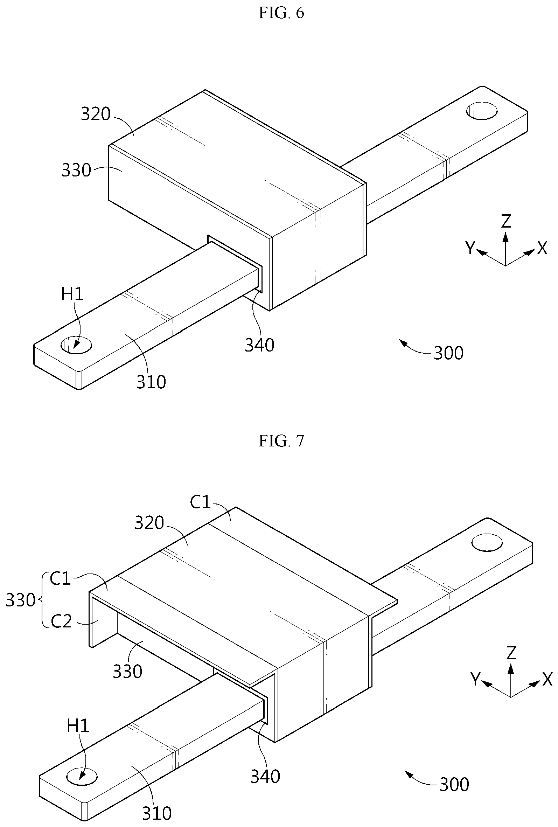

The bus bar unit 300 may be configured to seal the end or inside of the barrier unit 200 while electrically connecting different battery modules 100 to each other. A more specific configuration of the bus bar unit 300 will be described in more detail with reference to FIG. 6.

FIG. 6 is a perspective view schematically showing the configuration of the bus bar unit 300 according to an embodiment of the present disclosure.

Referring to FIGS. 1 to 3 along with FIG. 6, the bus bar unit 300 may include a conduction portion 310 and a sealing portion 320.

First, the conduction portion 310 may be configured such that both ends thereof are connected to the module terminals 120 of different battery module 100. For example, the conduction portion 310 may be configured to extend in the x-axis direction, and fastening holes as indicated by H1 may be formed at both ends in the x-axis direction. In a state in which the module terminals 120 of the different battery modules 100 are in contact with both ends of the conduction portion 310, a fastening member such as a bolt may be inserted and fastened to the fastening hole H1, respectively. For example, the negative electrode terminal of one battery module 100 may be connected and fastened to the fastening hole H1 formed at one end of the conduction portion 310, and the positive electrode terminal of the other battery module 100 may be connected and fastened to the fastening hole H1 formed at the other end of the conduction portion 310. In this case, the two battery modules 100 may be connected in series with each other by the conduction portion 310 of the bus bar unit 300. In particular, the conduction portion 310 is a component for electrically connecting different battery modules 100, and may be made of an electrically conductive material. For example, the conduction portion 310 may be made of a metal material such as copper, aluminum, or nickel. As a more specific example, the conduction portion 310 may be formed in a shape such as a copper rod or a copper plate extending in one direction.

Next, the sealing portion 320 may be configured to surround at least a part of the conduction portion 310. For example, as shown in FIG. 6, the sealing portion 320 may be configured to surround the central portion of the conduction portion 310 in the y-axis direction and z-axis direction, except for both ends of the conduction portion 310 to which the module terminal 120 is connected, particularly except for the portion in which the fastening hole H1 is formed. Moreover, the sealing portion 320 may be configured to protrude outer than the conduction portion 310. For example, as shown in FIG. 6, the sealing portion 320 may be configured to protrude in the front and rear direction (±y-axis direction) and the upper and lower direction (±z-axis direction) rather than the conduction portion 310.

In addition, due to this protruding configuration, the sealing portion 320 may be configured to seal the end or the inside of the barrier unit 200. That is, the sealing portion 320 may be configured to protrude forward, rearward, upward and downward than the conduction portion 310 to seal the accommodation portion formed in the end or inside of the barrier unit 200. In particular, referring to FIGS. 4 and 5, an accommodation groove G is formed at the front end of the barrier unit 200, and the accommodation groove G may be completely filled by the sealing portion 320 of the bus bar unit 300 to seal the front end of the barrier unit 200.

The sealing portion 320 may be made of a non-conductive material. Since current flows in the conduction portion 310, the sealing portion 320 needs to prevent the current flowing in the conduction portion 310 from flowing to other components (the pack case 400, the barrier unit 200, the split unit 500, etc.). That is, since the sealing portion 320 may be made of an electrically non-conductive material, it is possible to electrically insulate the conduction portion 310 from other components.

In addition, the sealing portion 320 may be made of an elastic material. In particular, the sealing portion 320 may be configured to seal the end or inside of the barrier unit 200 so that an empty space does not exist at the end or inside of the barrier unit 200. At this time, in order to improve the sealing force by the sealing portion 320, the sealing portion 320 may be made of an elastic material.

Moreover, the sealing portion 320 may be configured to have a size identical to or slightly larger than the size of the accommodation portion of the barrier unit 200. For example, the sealing portion 320 may be configured to have a slightly larger size than the accommodation groove of the barrier unit 200 before being inserted into the accommodation groove of the barrier unit 200 and to be somewhat compressed as an elastic body when being inserted into the accommodation groove of the barrier unit 200.

For example, the sealing portion 320 may be configured to include a material such as rubber. Alternatively, the sealing portion 320 may be configured to include a foaming material such as polyurethane foam.

According to this embodiment of the present disclosure, the sealing force by the sealing portion 320 may be further increased.

In addition, the bus bar unit 300 may further include a blocking portion 330 as shown in FIG. 6.

The blocking portion 330 may be made of a material having a higher melting point than the sealing portion 320. In particular, the blocking portion 330 may be configured to include a material resistant to heat and/or flame. For example, the blocking portion 330 may be made of a mica material. As a more specific example, the blocking portion 330 may be configured in the form of a mica sheet.

In addition, the blocking portion 330 may be configured to be attached to the surface of the sealing portion 320. In particular, the blocking portion 330 may be configured to be positioned on at least a surface facing the space in which each battery module 100 is accommodated, namely on both surfaces on which the conduction portion 310 protrudes. For example, referring to FIGS. 3 and 6, the conduction portions 310 may protrude on both sides of the sealing portion 320 in the x-axis direction, and the blocking portion 330 may be configured in the form of a sheet attached to both side surfaces of the sealing portion 320 in the x-axis direction.

According to this configuration of the present disclosure, the sealing force by the bus bar unit 300 may be stably maintained even when an event occurs. In particular, when a flame or gas is generated in any one battery module 100, a high temperature flame or heat may be applied to the bus bar unit 300. At this time, since the flame or heat transmitted to the sealing portion 320 may be blocked or reduced by the blocking portion 330, it is possible to prevent the sealing portion 320 from being melted or deformed by the flame or heat. Therefore, in this case, the overall shape of the bus bar unit 300 may be maintained, and in particular, the shape or sealing characteristics of the sealing portion 320 may be maintained without significantly changing. Moreover, in this case, for the sealing portion 320, a material having high sealing properties rather than heat stability may be adopted, so that the sealing force by the bus bar unit 300 may be more stably secured.

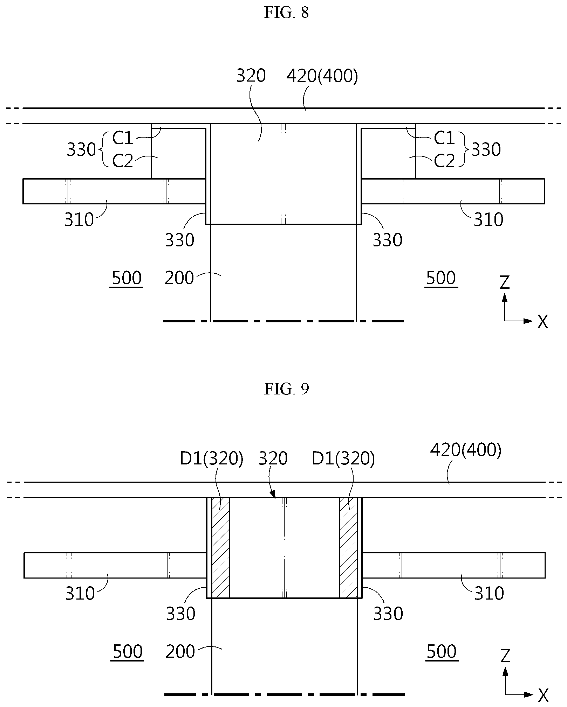

The blocking portion 330 may be configured so that at least one end thereof is bent. This will be described in more detail with reference to FIGS. 7 and 8.

FIG. 7 is a perspective view schematically showing the configuration of a bus bar unit 300 according to another embodiment of the present disclosure, and FIG. 8 is a diagram schematically showing a part of the configuration in which the bus bar unit 300 of FIG. 7 is installed between the barrier unit 200, the pack case 400, and the split unit 500. In particular, it may be regarded that FIG. 8 is a diagram showing the bus bar unit 300, viewed in a horizontal direction. For example, FIG. 8 may be regarded as a diagram showing an example of a cross-sectional shape, taken along the line A4-A4', in a state in which the barrier unit 200 and the bus bar unit 300 shown in FIG. 5 are included in the pack case 400. For this embodiment, features different from the former embodiment will be described in detail, and features identical or similar to the former embodiment will not be described in detail.

Referring to FIGS. 7 and 8, the blocking portion 330 of the bus bar unit 300 may have an outer end or outer edge bent as indicated by C1 and C2. In particular, the blocking portion 330 of the bus bar unit 300 may be configured such that an edge portion thereof in contact with other components, for example the upper case 420 or the surface of the split unit 500, is bent.

As a more specific example, the blocking portion 330 may be configured such that the upper end thereof is in contact with the lower surface of the upper case 420. In this case, the upper end of the blocking portion 330 may be bent outward along the lower surface of the upper case 420, as indicated by C1 in the drawing. For example, referring to FIG. 8, the blocking portions 330 may be provided at the left and right sides of the sealing portion 320, respectively. Here, the upper end of the left blocking portion 330 may be bent in the left direction, and the upper end of the right blocking portion 330 may be bent in the right direction.

In addition, the blocking portion 330 may be configured such that the front end thereof is in contact with the surface of the split unit 500. In this case, the front end of the blocking portion 330 may be configured to be bent outward along the surface of the split unit 500, as indicated by C2 in the drawing. For example, referring to FIG. 8, the blocking portions 330 may be provided at the left and right sides of the sealing portion 320, respectively. Here, the front end of the left blocking portion 330 may be bent in the left direction, and the front end of the right blocking portion 330 may be bent in the right direction.

Moreover, as in this embodiment, the blocking portion 330 may be configured such that the upper end and/or the front end are bent in an L-shape.

According to this embodiment of the present disclosure, the performance of the blocking portion 330 to protect the sealing portion 320 from heat or flame may be further improved. In particular, in this embodiment, a path where a gap may be formed between the blocking portion 330 and another component, for example between the blocking portion 330 and the upper case 420 or between the blocking portion 330 and the split unit 500, may be formed to due to the bent part of the blocking portion 330. Accordingly, the inflow of gas or flame through the path of the gap may be more reliably blocked. Therefore, according to this embodiment, since the sealing portion 320 is more reliably prevented from being deformed or melted by gas, flame, etc., the sealing performance by the sealing portion 320 may be more stably secured.

Meanwhile, the bus bar unit 300 may further include a coating portion 340 between the conduction portion 310 and the sealing portion 320, as shown in FIGS. 6 and 7. Here, the coating portion 340 may be made of a material capable of securing or improving electrical insulation for the conduction portion 310.

FIG. 9 is a diagram schematically showing a part of the configuration in which the bus bar unit 300 according to another embodiment of the present disclosure is installed between the barrier unit 200, the pack case 400, and the split unit 500. In particular, FIG. 9 may be regarded as a modification to the embodiment of FIG. 8. Also for this embodiment, features different from the former embodiments will be described in detail.

Referring to FIG. 9, the sealing portion 320 of the bus bar unit 300 may include a thermally expandable material like the portion indicated by D1. Here, the thermally expandable material D1 is a material that can expand in volume over a certain level when heat is applied, and various materials having a thermal expansion property known at the time of filing of this application may be employed. For example, at least a part of the sealing portion 320 may be configured to be thermally expandable by including a polymer material such as PDMS (Poly-DiMethyl-Siloxane), polyvinyl acetate, polystyrene, butyl(meth)acrylate, hexyl(meth)acrylate, n-octyl(meth)acrylate, isooctyl(meth)acrylate, 2-ethylhexyl (meth)acrylate, and isononyl(meth)acrylate.

According to this embodiment of the present disclosure, since the sealing portion 320 includes the thermally expandable material D1, when heat, flame, high-temperature gas, etc. are generated from a specific battery module 100, the sealing force of the sealing portion 320 may be improved. As a more specific example, in the embodiment of FIG. 9, when a flame or gas is generated in the battery module 100 located at the left side of the bus bar unit 300, the thermally expandable material of the sealing portion 320 may be expanded due to the heat. In addition, due to this expansion, the sealing portion 320 may further seal the space between the barrier unit 200 and the upper case 420 and the space between the barrier unit 200 and the split unit 500. Therefore, the flame or gas generated from the battery module 100 located at the left side of the bus bar unit 300 may not easily move to the battery module 100 located at the right side of the bus bar unit 300.

In addition, the sealing portion 320 may have a protrusion or groove formed to be insertion-fastened with the accommodation portion of the barrier unit 200.

For example, the sealing portion 320 may include a protrusion formed to protrude downward, like the portion indicated by P1 in FIG. 4. Also, in the accommodation portion of the barrier unit 200, a groove may be formed in a shape corresponding to the protrusion P1, like the portion indicated by E1. In this embodiment, when the bus bar unit 300 is seated in the accommodation portion of the barrier unit 200, the protrusion P1 of the sealing portion 320 may be inserted into the groove E1 of the accommodation portion.

According to this configuration of the present disclosure, the bus bar unit 300 and the barrier unit 200 may be fastened more stably. That is, when the bus bar unit 300 is inserted into the accommodation portion of the barrier unit 200, the movement of the bus bar unit 300 in the y-axis direction may be restricted due to the coupling of the protrusion P1 and the groove E1. In addition, according to this embodiment, since the fastening positions of the bus bar unit 300 and the barrier unit 200 may be guided by the protrusion P1 and the groove E1, the bus bar unit 300 and the barrier unit 200 may be assembled more easily.

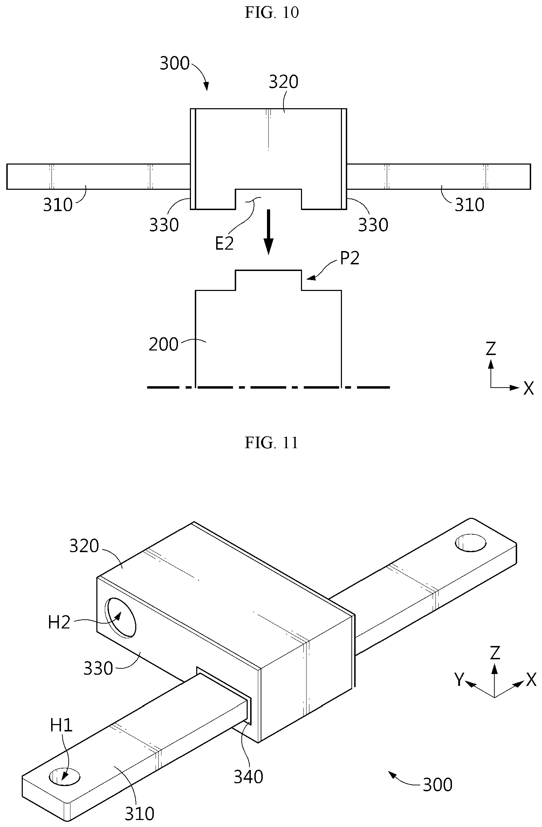

FIG. 10 is an exploded perspective view schematically showing some components of a bus bar unit 300 and a barrier unit 200 according to another embodiment of the present disclosure. Also, FIG. 10 is a diagram showing another embodiment of the bus bar unit 300 and the barrier unit 200, viewed in the direction A4-A4' of FIG. 5, and depicts a state in which the bus bar unit 300 and the barrier unit 200 are separated. For this embodiment, features different from the former embodiments will be described in detail.

Referring to FIG. 10, the sealing portion 320 of the bus bar unit 300 may have a groove concave upward as indicated by E2. In addition, the barrier unit 200 may include a protrusion P2 convex upward in a shape corresponding to the groove E2 of the sealing portion 320. In this case, when the bus bar unit 300 moves downward as indicated by an arrow and is seated on the upper end of the barrier unit 200, the protrusion P2 of the barrier unit 200 may be inserted and fastened into the groove E2 of the sealing portion 320.

According to this embodiment of the present disclosure, the fastening force between the bus bar unit 300 and the barrier unit 200 may be more stably secured. In particular, in this embodiment, it may be regarded that unevenness exists in the left and right direction (±x-axis direction), namely in the arrangement direction of the battery modules 100. Accordingly, in this case, the movement of the bus bar unit 300 in the left and right direction may be restricted. In particular, when a flame or gas is generated in a specific battery module 100, the bus bar unit 300 may receive force to move in the left and right direction by pressure. However, according to this embodiment, the movement of the bus bar unit 300 in the left and right direction may be restricted due to the uneven coupling between the bus bar unit 300 and the barrier unit 200. Therefore, in this case, it is possible to prevent the bus bar unit 300 from being separated from the accommodation portion of the barrier unit 200 due to the pressure. In addition, according to this embodiment, since the boundary between the bus bar unit 300 and the barrier unit 200 is formed in a concave-convex shape, the path along which the flame or gas flows out through the boundary portion may be lengthened. Therefore, it is possible to more effectively prevent a flame or gas from leaking through the boundary portion.

Meanwhile, in the embodiment of FIG. 10, it is depicted that one protrusion P2 is formed in the barrier unit 200, but a plurality of protrusions P2 may also be formed. In particular, the barrier unit 200 and the bus bar unit 300 may be formed to have unevenness in shapes and positions corresponding to each other.

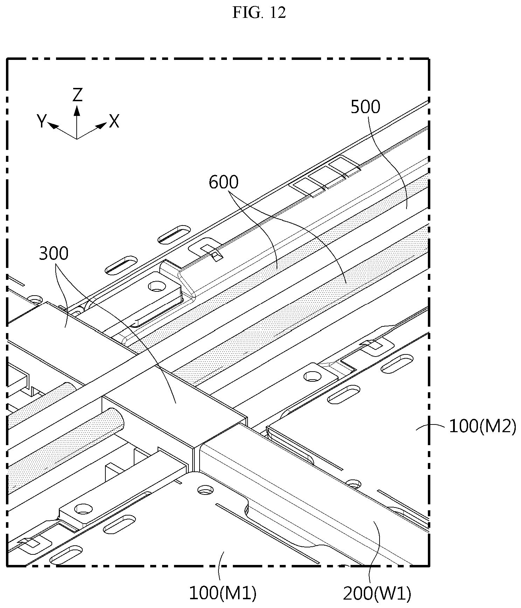

FIG. 11 is a perspective view schematically showing the configuration of a bus bar unit 300 according to another embodiment of the present disclosure, and FIG. 12 is a diagram schematically showing a partial configuration of a battery pack to which the bus bar unit 300 of FIG. 11 is applied. For this embodiment, features different from the former embodiments will be described in detail.

First, referring to FIG. 11, the sealing portion 320 of the bus bar unit 300 may have a perforated hole, as indicated by H2. In particular, the battery pack may include at least one cable 600, and the perforated hole H2 may be configured to allow the cable 600 to pass therethrough. Here, the cable 600 may be a sensing cable for transmitting sensing information of each battery module 100, for example voltage sensing information, to a control unit such as a battery management system (BMS). Alternatively, the cable 600 may be a power cable for supplying power to a specific component. The cable 600 may be included to pass between the storage spaces for the battery modules 100 divided by the barrier unit 200 and the bus bar unit 300, and according to this embodiment, the cable 600 may be configured to pass through the sealing portion 320 of the bus bar unit 300. In particular, as shown in FIG. 11, when the blocking portion 330 such as a mica sheet is attached to the outer surface of the sealing portion 320, the perforated hole may also be formed in the blocking portion 330.

According to this embodiment, it is possible to allow the cable 600 to pass between the storage spaces for the battery modules 100 and to prevent or reduce the passage of flame or gas through the passage space of the cable 600. In particular, the sealing portion 320 may be made of an elastic material such as rubber. In this case, by forming the perforated hole H2 to have a size similar to or smaller than the size of the cable 600, the perforated hole H2 of the sealing portion 320 and the cable 600 come into close contact with each other. In this case, it is possible to minimize the escape of flame or gas through the gap between the perforated hole H2 of the sealing portion 320 and the cable 600.

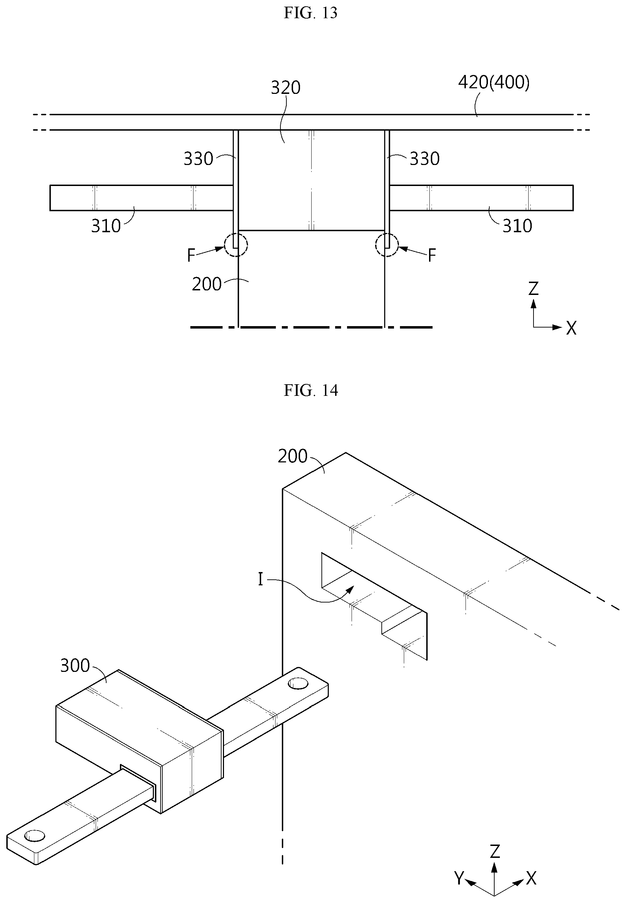

FIG. 13 is a diagram schematically showing a part of the configuration in which a bus bar unit 300 according to another embodiment of the present disclosure is coupled to the barrier unit 200. In particular, FIG. 13 may be regarded as a modification to the embodiments of FIGS. 8 to 11. For this embodiment, features different from the former embodiments will be described in detail.

Referring to FIG. 13, the bus bar unit 300 may be configured such that the blocking portion 330 extends toward the barrier unit 200 further to the sealing portion 320, as indicated by F. That is, the blocking portion 330 may be configured to cover a part of the barrier unit 200 as well as the sealing portion 320. For example, the bus bar unit 300 may be seated on the upper end of the barrier unit 200, and the blocking portion 330 may be configured to cover both the left and right surfaces of the sealing portion 320 and to further extend in the lower direction. In addition, the bus bar unit 300 may be provided at the front end of the barrier unit 200, and the blocking portion 330 may be configured to further extend rearward from the surface of the sealing portion 320.

According to this configuration of the present disclosure, the sealing property between the barrier unit 200 and the bus bar unit 300 may be further improved. That is, when the blocking portion 330 of the bus bar unit 300 extends to cover a part of the bus bar unit 300 as indicated by F in the configuration of FIG. 13, the gap between the barrier unit 200 and the bus bar unit 300 may be blocked by the blocking portion 330. Therefore, it is possible to more reliably prevent gas or flame from leaking through the gap between the barrier unit 200 and the bus bar unit 300.

In addition, according to this embodiment, the coupling property between the barrier unit 200 and the bus bar unit 300 may be improved. In particular, when gas is generated in any one battery module 100, pressure may be applied to the bus bar unit 300 adjacent thereto. For example, in the configuration of FIG. 13, when gas is generated from the battery module 100 located at the left side of the bus bar unit 300, the internal pressure of the corresponding space increases, and thus the bus bar unit 300 may receive power in the right direction (+x-axis direction). At this time, due to the extended portion of the blocking portion 330 as indicated by F, the movement of the bus bar unit 300 in the right direction may be restricted. Therefore, in this case, the bus bar unit 300 is not separated from the barrier unit 200 and may be stably located in the installation space.

FIG. 14 is an exploded perspective view schematically showing the configuration of a bus bar unit 300 and a barrier unit 200 according to another embodiment of the present disclosure. For this embodiment, features different from the former embodiments will be described in detail.

Referring to FIG. 14, the barrier unit 200 may have an accommodation hole formed to penetrate in the thickness direction (x-axis direction) as indicated by I. In addition, the bus bar unit 300 may be configured to be inserted into the accommodation hole I of the barrier unit 200. That is, in the embodiment of FIG. 14, the bus bar unit 300 may move to the left or right of the barrier unit 200 and be coupled to the barrier unit 200 in the form of being inserted into the accommodation hole of the barrier unit 200. In this case, it may be regarded that the bus bar unit 300 is located inside the barrier unit 200. In addition, the bus bar unit 300 may be configured to completely block the accommodation hole I when being inserted into the accommodation hole I of the barrier unit 200 as described above. That is, in this embodiment, the inside of the barrier unit 200 may be completely sealed by the bus bar unit 300.

Accordingly, in this case, due to the coupling of the bus bar unit 300, the movement of heat and/or flames between the space on the left and the space on the right of the barrier unit 200 may be blocked. Moreover, according to this embodiment, the movement of the bus bar unit 300 in the front and rear direction (±y-axis direction) may be restricted. Therefore, the barrier unit 200 and the bus bar unit 300 may be coupled more stably.

Meanwhile, in the embodiment of FIG. 14, the various embodiments described above, for example various configurations of the blocking portion 330 or the protrusion-groove fastening configuration, may be similarly applied.

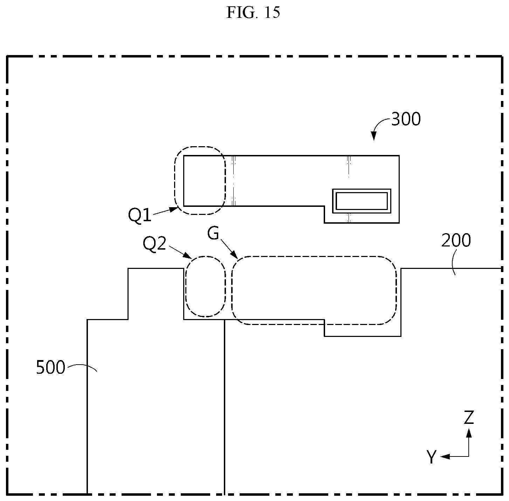

FIG. 15 is a diagram schematically showing a partial configuration of a battery pack according to another embodiment of the present disclosure. For this embodiment, features different from the former embodiments will be described in detail.

Referring to FIG. 15, the bus bar unit 300 may be configured to be coupled to the end of the barrier unit 200 to seal the end of the barrier unit 200 and to be seated on another component positioned at the end of the barrier unit 200. For example, as shown in FIG. 15, the split unit 500 may be positioned at the front end (+y-axis direction) of the barrier unit 200 to form a sealed space together with the barrier unit 200. In this case, the split unit 500 may be configured such that a part of the bus bar unit 300 may be seated thereon, as indicated by Q2. That is, the bus bar unit 300 is mostly seated in the accommodation groove G of the barrier unit 200, but the front end thereof as indicated by Q1 may be configured to extend forward longer than the size of the accommodation groove so as to be seated on the seating portion Q2 of the split unit 500.

According to this configuration of the present disclosure, since the bus bar unit 300 is seated on both the barrier unit 200 and the split unit 500, the fixability of the bus bar unit 300 may be improved. In addition, since the boundary surface (gap) between the bus bar unit 300 and the split unit 500 does not form the same plane as the inner surface of the split unit 500, the sealing force between the bus bar unit 300 and the split unit 500 may be improved.

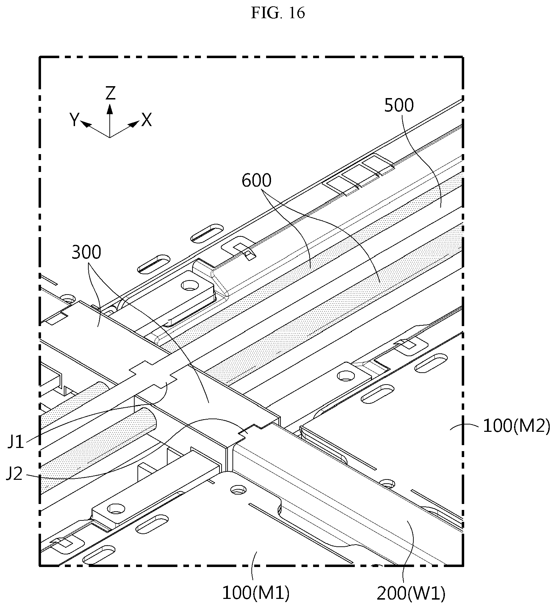

FIG. 16 is a diagram schematically showing a partial configuration of a battery pack according to another embodiment of the present disclosure. For this embodiment, features different from the former embodiments will be described in detail.

Referring to FIG. 16, the split unit 500 and the bus bar unit 300 may be configured to have protrusions, grooves, and/or irregularities with corresponding shapes so as to be insertion-fastened. For example, the split unit 500 may have a protrusion formed toward the bus bar unit 300, as indicated by J1 in FIG. 16. In addition, the bus bar unit 300 may have a groove formed in a shape corresponding to the protrusion J1.

According to this configuration of the present disclosure, the coupling force of the split unit 500 and the bus bar unit 300 may be improved. In particular, when gas is generated from the battery module 100 to increase the pressure in the internal space defined by the split unit 500 and the barrier unit 200, the bus bar unit 300 may receive force in the left and right direction (x-axis direction). However, according to this embodiment, the protrusion-groove fastening configuration between the split unit 500 and the bus bar unit 300 prevents this movement, so it is possible to prevent the bus bar unit 300 from being separated from the accommodation portion of the barrier unit 200.

Meanwhile, in order to increase this effect, as indicated by J2 in FIG. 16, a protrusion-groove fastening configuration may also exist between the barrier unit 200 and the bus bar unit 300, and this protrusion-groove fastening configuration is similar to the above description.

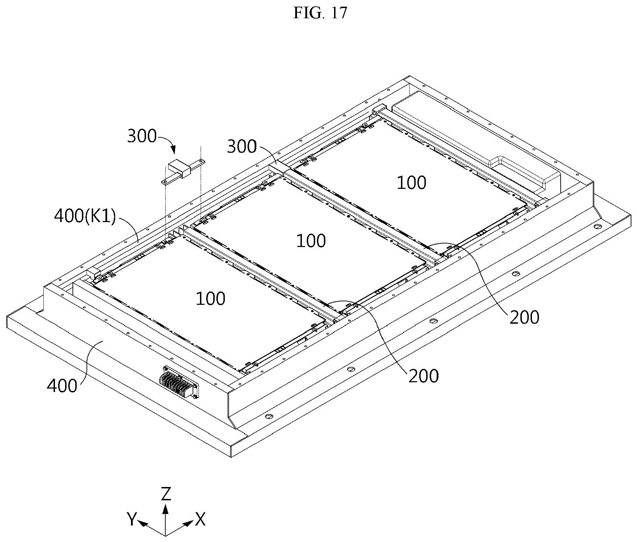

Meanwhile, in the several former embodiments, the battery pack has been described as including the split unit 500 and also including the bus bar unit 300 between the split unit 500 and the barrier unit 200, but the present disclosure is not limited thereto. For example, the split unit 500 may not be included in the battery pack, or the bus bar unit 300 may be positioned at a location other than between the barrier unit 200 and the split unit 500. An embodiment related thereto will be described in more detail with reference to FIG. 17.

FIG. 17 is a diagram schematically showing a partial configuration of a battery pack according to another embodiment of the present disclosure. For this embodiment, features different from the former embodiments will be described in detail.

Referring to FIG. 17, the split unit 500 is not included in the inner space of the pack case 400, and the front end of the barrier unit 200 may be configured to be in contact with a part of the inner surface of the pack case 400, as indicated by K1. In this case, the bus bar unit 300 may be interposed between the upper portion of the front end of the barrier unit 200 and the inner surface of the pack case 400. In this embodiment, the bus bar unit 300 may be configured to seal at least a partial space between the front end of the barrier unit 200 and the inner surface of the pack case 400.

However, this embodiment is just different from the several former embodiments in that the front end of the bus bar unit 300 is not in contact with the split unit 500 but is in contact with the pack case 400, and the features of the several former embodiments described above may be applied identically or similarly. That is, when substituting the configuration of the split unit 500 described above with the configuration of the pack case 400, various configurations for this embodiment may be described. Therefore, this embodiment will not be described in more detail.

The battery pack according to the present disclosure may be applied to a vehicle such as an electric vehicle or a hybrid electric vehicle. That is, the vehicle according to the present disclosure may include the battery pack according to the present disclosure. In addition, the vehicle according to the present disclosure may further include other various components included in a vehicle, in addition to the battery pack. For example, the vehicle according to the present disclosure may further include a vehicle body, a motor, and a control device such as an electronic control unit (ECU), in addition to the battery pack according to the present disclosure.

In addition, the battery pack according to the present disclosure may be applied to an energy storage system. That is, the energy storage system according to the present disclosure may include at least one battery pack according to the present disclosure. In addition, the energy storage system according to the present disclosure may further include various other components of the energy storage system known at the time of filing of this application. Moreover, the energy storage system may be used in various places or devices, such as a smart grid system or an electric charging station.

Meanwhile, in this specification, terms indicating directions such as "upper", "lower", "left", "right", "front", and "rear" are used, but these terms are just for convenience of explanation, and it is obvious to those skilled in the art that these terms may vary depending on the location of an object or the position of an observer.

The present disclosure has been described in detail. However, it should be understood that the detailed description and specific examples, while indicating preferred embodiments of the disclosure, are given by way of illustration only.

### Reference Signs

100: battery module
110: battery cell, 120: module terminal
200: barrier unit
300: bus bar unit
310: conduction portion, 320: sealing portion, 330: blocking portion, 340: coating portion
400: pack case
410: lower case, 420: upper case
500: split unit
600: cable

## Claims

1. A battery pack, comprising:
a plurality of battery modules (100), each of which includes at least one battery cell (110) and a module terminal (120);
a barrier unit (200) interposed between adjacent battery modules (100); and
a bus bar unit (300) configured to electrically connect module terminals (120) of different battery modules (100) and located at an end or inside of the barrier unit (200) to seal the end or inside of the barrier unit (200).

2. The battery pack according to claim 1, further comprising:
a split unit (500) disposed to be orthogonal to the barrier unit (200) and interposed between adjacent battery modules (100),
wherein the bus bar unit (300) is configured to be interposed between the end of the barrier unit (200) and a surface of the split unit (500).

3. The battery pack according to claim 1,
wherein the barrier unit (200) has an accommodation groove formed with a partially cut-off shape thereof, and the bus bar unit (300) is configured to be seated in the accommodation groove and fill the accommodation groove.

4. The battery pack according to claim 3,
wherein the barrier unit (200) is configured in a plate shape and has the accommodation groove at an edge portion thereof.

5. The battery pack according to claim 1,
wherein the bus bar unit (300) includes a conduction portion (310) made of an electrically conductive material and having both ends connected to module terminals (120) of different battery modules (100), and a sealing portion (320) configured to surround the conduction portion (310) and protrude outer than the conduction portion (310) to seal the end or inside of the barrier unit (200).

6. The battery pack according to claim 5,
wherein the sealing portion (320) is made of an elastic material.

7. The battery pack according to claim 5,
wherein the bus bar unit (300) further includes a blocking portion (330) made of a material having a higher melting point than the sealing portion (320) and attached to a surface of the sealing portion (320).

8. The battery pack according to claim 7,
wherein the blocking portion (330) is configured so that at least one end thereof is bent.

9. The battery pack according to claim 5,
wherein the sealing portion (320) has a protrusion or a groove formed to be insertion-fastened with an accommodation portion of the barrier unit (200).

10. The battery pack according to claim 5,
wherein the sealing portion (320) has a perforated hole formed so that a cable (600) passes therethrough.

11. A vehicle, comprising the battery pack according to any one of claims 1 to 10.

12. An energy storage system, comprising the battery pack according to any one of claims 1 to 10.

## Patentansprüche

1. Batteriepack, umfassend:
eine Vielzahl von Batteriemodulen (100), von denen jedes zumindest eine Batteriezelle (110) und einen Modulanschluss (120) umfasst;
eine Barriereeinheit (200), die zwischen benachbarten Batteriemodulen (100) angeordnet ist;
und
eine Sammelschieneneinheit (300), die dazu konfiguriert ist, die Modulanschlüsse (120) verschiedener Batteriemodule (100) elektrisch zu verbinden, und die an einem Ende oder der Innenseite der Barriereeinheit (200) angeordnet ist, um das Ende oder die Innenseite der Barriereeinheit (200) abzudichten.

2. Batteriepack nach Anspruch 1, ferner umfassend:
eine geteilte Einheit (500), die so angeordnet ist, dass sie orthogonal zu der Barriereeinheit (200) ist und
zwischen benachbarte Batteriemodule (100) eingefügt ist,
wobei die Sammelschieneneinheit (300) so konfiguriert ist, dass sie zwischen dem
Ende der Barriereeinheit (200) und einer Oberfläche der geteilten Einheit (500) angeordnet ist.

3. Batteriepack nach Anspruch 1,
wobei die Barriereeinheit (200) eine Aufnahmenut aufweist, die eine teilweise abgeschnittene Form aufweist, und die Sammelschieneneinheit (300) ist dazu konfiguriert, in der Aufnahmenut zu sitzen und die Aufnahmenut auszufüllen.

4. Batteriepack nach Anspruch 3,
wobei die Barriereeinheit (200) plattenförmig ausgebildet ist und die Aufnahmenut an einem ihrer Randabschnitt aufweist.

5. Batteriepack nach Anspruch 1,
wobei die Sammelschieneneinheit (300) einen Leitungsabschnitt (310) aus einem elektrisch leitenden Material aufweist und dessen beide Enden mit Modulanschlüssen (120) verschiedener Batteriemodule (100) verbunden sind, und einen Dichtungsabschnitt (320), der dazu konfiguriert ist, den Leitungsabschnitt (310) zu umgeben und nach außen über den Leitungsabschnitt (310) hinauszuragen, um das Ende oder die Innenseite der Barriereeinheit (200) abzudichten.

6. Batteriepack nach Anspruch 5,
wobei der Dichtungsabschnitt (320) aus einem elastischen Material gebildet ist.

7. Batteriepack nach Anspruch 5,
wobei die Sammelschieneneinheit (300) ferner einen Blockierabschnitt (330) aufweist, der aus einem Material mit einem höheren Schmelzpunkt als der Dichtungsabschnitt (320) gebildet und an einer Oberfläche des Dichtungsabschnitts (320) angebracht ist.

8. Batteriepack nach Anspruch 7,
wobei der Blockierabschnitt (330) so gestaltet ist, dass zumindest ein Ende davon gebogen ist.

9. Batteriepack nach Anspruch 5,
wobei der Dichtungsabschnitt (320) einen Vorsprung oder eine Nut aufweist, der/die mit einem Aufnahmeabschnitt der Barriereeinheit (200) ineinandersteckbar ist.

10. Batteriepack nach Anspruch 5,
wobei der Dichtungsabschnitt (320) ein perforiertes Loch aufweist, das so ausgebildet ist, dass ein Kabel (600) hindurchgeführt werden kann.

11. Ein Fahrzeug, das das Batteriepack nach einem der Ansprüche 1 bis 10 umfasst.

12. Ein Energiespeichersystem mit dem Batteriepack nach einem der Ansprüche 1 bis 10.

## Revendications

1. Bloc-batterie, comprenant :
une pluralité de modules de batterie (100), dont chacun inclut un ou plusieurs éléments de batterie (110) et une borne de module (120) ;
une unité de barrière (200) interposée entre des modules de batterie adjacents (100) ; et
une unité de barre omnibus (300) configurée pour connecter électriquement des bornes de module (120) de différents modules de batterie (100) et pour être positionnée à une extrémité ou à l'intérieur de l'unité de barrière (200) de façon à sceller l'extrémité ou l'intérieur de l'unité de barrière (200).

2. Bloc-batterie selon la revendication 1, comprenant en outre :
une unité de division (500) disposée pour être orthogonale à l'unité de barrière (200) et interposée entre des modules de batterie adjacents (100),
dans lequel l'unité de barre omnibus (300) est configurée pour être interposée entre l'extrémité de l'unité de barrière (200) et une surface de l'unité de division (500).

3. Bloc-batterie selon la revendication 1,
dans lequel l'unité de barrière (200) a une rainure de réception formée d'une forme partiellement coupée de celle-ci, et l'unité de barre omnibus (300) est configurée pour être posée dans la rainure de réception et remplir la rainure de réception.

4. Bloc-batterie selon la revendication 3,
dans lequel l'unité de barrière (200) est configurée en forme de plaque et a la rainure de réception à une partie de bord de celle-ci.

5. Bloc-batterie selon la revendication 1,
dans lequel l'unité de barre omnibus (300) inclut une partie de conduction (310) faite d'un matériau électriquement conducteur et ayant les deux extrémités connectées aux bornes de module (120) de différents modules de batterie (100), et une partie d'étanchéité (320) configurée pour entourer la partie de conduction (310) et saillir vers l'extérieur plus que la partie de conduction (310) pour sceller l'extrémité ou l'intérieur de l'unité de barrière (200).

6. Bloc-batterie selon la revendication 5,
dans lequel la partie d'étanchéité (320) est faite d'un matériau élastique.

7. Bloc-batterie selon la revendication 5,
dans lequel l'unité de barre omnibus (300) inclut en outre une partie de blocage (330) faite d'un matériau ayant un point de fusion plus élevé que la partie d'étanchéité (320) et fixée à une surface de la partie d'étanchéité (320).

8. Bloc-batterie selon la revendication 7,
dans lequel la partie de blocage (330) est configurée de sorte qu'au moins une de ses extrémités est pliée.

9. Bloc-batterie selon la revendication 5,
dans lequel la partie d'étanchéité (320) a une saillie ou une rainure formée pour être fixée par insertion avec une partie de réception de l'unité de barrière (200).

10. Bloc-batterie selon la revendication 5,
dans lequel la partie d'étanchéité (320) a un trou perforé formé de sorte qu'un câble (600) y passe.

11. Véhicule, comprenant le bloc-batterie selon l'une quelconque des revendications 1 à 10.

12. Système de stockage d'énergie, comprenant le bloc-batterie selon l'une quelconque des revendications 1 à 10.
